# EUROPÄISCHE PATENTSCHRIFT

(11) **EP 1 948 951 B1**
(45) Veröffentlichungstag und Bekanntmachung des Hinweises auf die Patenterteilung: **21.01.2015**
(21) Anmeldenummer: 06819347.3
(22) Anmeldetag: 09.11.2006
(51) Int. Cl.: F16D 23/14

(54) **AUSRÜCKLAGER FÜR EINE BETÄTIGUNGSEINRICHTUNG EINER SCHALTKUPPLUNG**
RELEASE BEARING FOR AN ACTUATING DEVICE OF A SHIFT CLUTCH
BUTEE DE DEBRAYAGE POUR UN DISPOSITIF D'ACTIONNEMENT D'UN EMBRAYAGE

(30) Priorität: 10.11.2005 DE 102005053612
(43) Veröffentlichungstag der Anmeldung: 30.07.2008
(73) Patentinhaber: Schaeffler Technologies GmbH & Co. KG, 91074 Herzogenaurach (DE)
(72) Erfinder: WINKELMANN, Ludwig, 91056 Erlangen (DE); DITTMER, Steffen, 91086 Münchaurach (DE); KLÖPFER, Bernhard, 91438 Bad Windsheim (DE)
(86) Internationale Anmeldenummer: PCT/EP2006/068268
(87) Internationale Veröffentlichungsnummer: WO 2007/054528

(56) Entgegenhaltungen:
- EP-A1- 0 773 384
- EP-A1- 0 841 496
- DE-A1- 4 412 928

## Beschreibung

### Beschreibung

### Gebiet der Erfindung

Die Erfindung betrifft ein Ausrücklager für eine Betätigungseinrichtung einer Schaltkupplung, insbesondere nach dem Oberbegriff des Patentanspruchs 1.

### Hintergrund der Erfindung

In der DE 103 11 207 A1 ist ein Ausrücklager für eine Betätigungseinrichtung einer Schaltkupplung beschrieben, die in Fahrzeugen zwischen einem Verbrennungsmotor und einem Schaltgetriebe eingesetzt ist, wobei das als Schrägschulterlager ausgebildete Ausrücklager einen umlaufenden äußeren Lagerring und einen drehstarren inneren Lagerring aufweist, zwischen denen in Laufbahnen und geführte und in einem Käfig eingesetzte Wälzkörper angeordnet sind, wobei zur Abdichtung der kupplungsnahen Seite des Ausrücklagers eine innere Metalldichtscheibe vorgesehen ist, die mit dem äußeren Lagerring in reibschlüssiger Verbindung steht und die unter Einhaltung eines ringförmigen Dichtspalts bis an den inneren Lagerring geführt ist und wobei die beiden Lagerringe mit je einem rechtwinklig zur Längsachse des Ausrücklagers ausgerichteten Innenringflansch und Außenringflansch einteilig verbunden sind.

In obiger Offenlegungsschrift sind Maßnahmen an einer an sich bekannten berührungslosen Dichtung beschrieben, die zur Verbesserung der Oldichtheit der kupplungsfernen Seite des Ausrücklagers dienen.

Auf der kupplungsnahen Seite des oben beschriebenen Ausrücklagers ist eine als innere Metalldichtscheibe bekannte berührungslose Dichtung vorgesehen, deren Dichtvermögen für gute Straßen ausreicht. Bei schlechten Straßenverhältnissen ist aber wegen der Gefahr des Eindringens von grobem Schmutz und Flüssigkeit in das Ausrücklager eine Verbesserung der Abdichtung erforderlich.

Die EP 0 773 384 A1 offenbart ein Ausrücklager, das zwischen dem äußeren Lagerring und dem inneren Lagerring eine Mithaltigscheibe sowie ein zusätzliches Dichtelement angeordnet ist, dass zur Ausbildung einer Abdichtung des Ausrücklagers dient.

### Aufgabe der Erfindung

Der Erfindung liegt die Aufgabe zugrunde, ein gattungsgemäßes Ausrücklager mit einer sicheren, reibungsarmen Abdichtung zu schaffen, die im vorhandenen Bauraum unterbringbar ist.

### Zusammenfassung der Erfindung

Die Aufgabe der Erfindung wird gelöst durch die Merkmale des unabhängigen Patentanspruchs 1.

Die zusätzliche Dichtung bietet den Vorteil einer erhöhten Dichtwirkung. Das gilt besonders dann, wenn die zusätzliche Dichtung eine schleifende Dichtung ist. Jedoch auch eine Labyrinth- oder Spaltdichtung kann durch entsprechende Labyrinthgestaltung und/oder entsprechende Spaltlänge und Spaltbreite zu einer wirkungsvollen Dichtung führen. Außerdem bietet diese Dichtungsart den Vorteil eines geringen Reibwiderstands und Verschleißes und somit einer langen Funktionsdauer.

Die Unterbringung der Dichtelemente zwischen der kupplungsnahen Fläche des Außenringflanschs und der kupplungsfernen Fläche des Innenringflanschs erfordert keinen zusätzlichen Bauraum außerhalb des Ausrücklagers.

Die Vorteile des erfindungsgemäßen Ausrücklagers gelten sinngemäß auch für ein entsprechend ausgebildetes Einrücklager, wie es bei Doppelkupplungsgetrieben erforderlich ist.

Eine Alternative gemäß der Erfindung besteht darin, dass das Dichtelement des Ausrücklagers einen radialen, nach innen gerichteten Dichtflansch aufweist, der aus Metallblech besteht und mit der inneren Metalldichtscheibe einteilig verbunden ist und dessen innerer Endbereich in metallischem oder nicht metallischem Kontakt mit einer verdrehfesten Anlauffläche eines Vorspannrings oder eines Bördelkragens des Ausrücklagers steht.

Dieses Dichtelement zeichnet sich auf Grund seiner Befestigung an der inneren Metalldichtscheibe durch geringen Bauraumbedarf und durch Entfall von Nacharbeit an den Außen- und Innenringflanschen aus. Die einteilige Ausbildung der inneren Metalldichtscheibe und des radialen Dichtflanschs erspart Fertigungs- und Montagekosten. Der relativ kleine Reibradius der schleifenden Dichtung bewirkt ein niedriges Reibmoment derselben. *Ein niedriges Reibmoment der schleifenden Dichtlippe wird auch bewirkt, wenn wie eine Ausgestaltung der Erfindung vorsieht, die Dichtlippe axial, das heißt in Richtungen quer zu den radial ausgerichteten des Innen- oder Außenringflanschen, zumindest zeitweise schleifend anliegt.*

Von Vorteil ist auch, dass die einteilige Ausbildung des radialen Dichtflanschs und der inneren Metalldichtscheibe über eine Dopplung *der Metalldichtscheibe oder über eine Dopplung* von deren metallischem Dichtkragen oder über eine Anformung des radialen Dichtflanschs an eine radiale Wand der inneren Metalldichtscheibe erfolgt. Insbesondere die Anformung des Dichtflanschs an die radiale Wand der inneren Metalldichtscheibe erleichtert die einstückige Ausbildung von Dichtflansch und Dichtscheibe. Das gilt auch für den Fall, bei dem anstelle des gedoppelten metallischen Dichtkragens ein an die radiale Wand angespritzter oder anvulkanisierter, nicht metallischer Dichtkragen tritt, der über Durchstellungen der radialen Wand an dieser verankert ist. Auf diese Weise werden Fertigungskosten gesenkt.

*Eine zweite Alternative gemäß der Erfindung sieht vor, dass die Metallscheibe und das Dichtelement aus separaten Blechen, also separat zueinander ausgebildet, gebildet sind und entweder getrennt voneinander oder gemeinsam miteinander verbunden am Innen- oder Außenring befestigt sind. Es ist zum Beispiel vorgesehen, dass die Metallscheibe und das Metallblech des Dichtelements mittels Presssitz und*/*oder mittels des Materials der Dichtlippe miteinander verbunden sind. Das Dichtelement sitzt wahlweise am Innenring und weist dichtend zum Außenring bzw. liegt dort dichtend an oder das Dichtelement sitzt am Außenring und weist dichtend zum Innenring bzw. liegt dort dichtend an. Wenn das Dichtelement am Innenring gehalten ist, kann dieses in einer Bohrung des radialen Außenringflansches sitzen. Die Bohrung kann wahlweise nach außen öffnend konisch erweitert sein.*

Es ist von Vorteil, wenn das Dichtelement des Ausrücklagers am inneren Endbereich des radialen Dichtflanschs eine Dichtlippe aufweist, die angespritzt oder anvulkanisiert ist und die mit der drehfesten Anlauffläche des Vorspannrings oder des Bördelkragens in nicht metallischem Kontakt steht und eine schleifende Dichtung bildet. Der Vorspannring ermöglicht eine getrennt gefertigte Anlauffläche, die im Vergleich zu der des Bördelkragens eine höhere Oberflächenqualität aufweist, mit der eine gute Dichtwirkung erzielbar ist.

Für eine lange Funktionsdauer des Dichtelements ist es von Vorteil, wenn der innere Endbereich des Dichtflanschs parallel zu dem Bördelkragen angeordnet ist und als Spaltdichtung dient. Alternativ besteht die Möglichkeit, dass der Dichtkragen vorzugsweise rechtwinklig gegen den Bördelkragen angefedert ist und eine schleifende Dichtung bildet. Die Spaltdichtung ist verschleißfrei und die schleifende Dichtung ist durch den "Stahl-auf-Stahl-Kontakt" langlebig.

Eine vorteilhafte Weiterbildung des Ausrücklagers besteht darin, dass das Dichtelement des Ausrücklagers an dem Innenringflansch befestigt ist, der mindestens zwei, vorzugsweise gleiche axiale Befestigungsöffnungen aufweist, die zur Längsachse des Ausrücklagers vorzugsweise drehsymmetrisch angeordnet sind. Die drehsymmetrisch angeordneten Befestigungsöffnungen erleichtern, falls sie die Zahl 2 übersteigen, die Montage des Dichtelements, da in diesem Fall mehrere Drehpositionen desselben möglich sind.

Für Dichtelemente, die vorzugsweise in Anwendungsbereichen mit höherer Betriebstemperatur eingesetzt werden, ist es von Vorteil, wenn das Dichtelement ein Trägerelement aus vorzugsweise Federstahl aufweist, das mit einem Schnapphaken in die Befestigungsöffnung des Innenringflanschs einschnappbar und durch eine Rasternase axial fixierbar ist sowie als Träger eines Dichtungsrings dient.

Es bietet Vorteile, wenn das Dichtelement des Ausrücklagers ein entsprechend ausgebildetes Trägerelement aufweist, an das der aus Elastomer bestehende Dichtungsring anvulkanisiert ist. Dieser weist mindestens eine Dichtlippe auf, die zusammen mit einem abgestuften Bereich der kupplungsfernen Fläche des Außenringflanschs eine schleifende, gummielastisch vorgespannte Dichtung bildet. Das stählerne Trägerelement sichert eine genaue und temperaturunabhängige Position desselben. Es hat Vorteile, dass das Dichtelement des Ausrücklagers einen Dichtungsring aufweist, der zwischen dem entsprechend ausgebildeten Trägerelement und dem Innenringflansch einklemmbar ist und dass eine Dichtlippe des Dichtungsringes zusammen mit einer Innenkante einer Bohrung des Außenringflansches eine schleifende Dichtung bildet.

Der einklemmbare Dichtungsring aus Elastomer kann kostengünstig als Einzelteil gefertigt werden. Die schmale Auflage der Dichtlippe sichert eine wirksame Abdichtung bei niedrigem Dichtungsreibmoment und geringer Aufheizung der Dichtlippe bzw. des Ausrücklagers.

Eine vorteilhafte Lösung der Abdichtung des Ausrücklagers besteht darin, dass das Dichtelement des Ausrücklagers einen scheibenförmigen Dichtungsring aus verschleißfestem reibungsarmen Kunststoff oder Elastomer aufweist, dessen kupplungsferne Seite durch Eigenelastizität oder Fremdanfederung mit einem passend ausgebildeten Trägerelement in Kontakt steht und dessen kupplungsnahe Seite über mindestens eine einteilig angeformte kreis- oder spiralförmig ausgebildete Dichtlippe mit dem abgestuften Bereich des Außenringsflanschs Kontakt aufweist. Die Auswahl des Dichtungsmaterials hängt u. a. von Umwelteinflüssen wie Temperatur, Salz- und Ozongehalt der Luft und von der Art und Qualität des Schmierfetts für das Ausrücklager ab.

Die spiralförmig ausgebildete Dichtlippe bietet den Vorteil, dass sie durch ihre Förderwirkung das Eindringen von Schmutzpartikeln und flüssigen Stoffen verhindert. Durch eine zusätzliche spiralförmige Dichtlippe mit entgegen gesetzter Steigung kann ein Austreten des Lagerfetts verhindert werden.

Eine über die gesamte Lebensdauer des Ausrücklagers konstant wirkende Anpresskraft der Dichtlippe wird dadurch erreicht, dass die Eigenelastizität des Dichtungsrings durch Abstützpunkte oder umlaufende Rippen verwirklicht ist, die auf der kupplungsfernen Seite des Dichtungsrings einteilig angeformt sind und dass zur Fremdanfederung vorzugsweise eine Wellfeder dient, die zwischen dem Dichtungsring und dem Trägerelement angeordnet ist.

Von Vorteil ist auch, wenn das Dichtelement einen Dichtungsring aus öl- und wasserabweisend imprägniertem Vlies aufweist, der vorzugsweise mittels selbstklebender Haftschicht an der kupplungsnahen Seite eines entsprechend ausgebildeten Trägerelements befestigt ist und der im spitzen Winkel gegen eine mit einem schmalen Dichtkragen versehenen Innenkante der Bohrung des Außenringflanschs unter Nutzung der Eigenelastizität des Dichtungsrings angefedert ist.

Eine konstruktiv besonders einfache Lösung zeichnet sich dadurch aus, dass das Dichtelement des Ausrücklagers an der kupplungsnahen Fläche des Innenringsflanschs einen Trägerring aufweist, der vorzugsweise durch Kleben fixiert ist und an dessen kupplungsnaher Fläche ein durch Kleben befestigter Dichtungsring aus Vlies oder Kunststoff angeordnet ist, der zusammen mit der kupplungsfernen Fläche des Außenringsflanschs eine vorzugsweise tangierende Dichtung bildet.

Ist auf der kupplungsnahen Fläche des Dichtungsrings eine kreis- oder spiralförmige Dichtlippe vorgesehen, so bildet diese mit der kupplungsfernen Fläche des Außenringflanschs eine schleifende Dichtung. Die spiralförmige Dichtlippe dient zusätzlich zur Förderung von Schmutzpartikeln nach außen.

Die Dichtwirkung einer Dichtung kann dadurch erhöht werden, dass die Bohrung des Außenringflanschs eine nach außen sich öffnende, konische Erweiterung aufweist, die als Schleuderring wirkt und in Verbindung mit einer spielbehafteten, koaxialen, inneren Abdeckung als Vordichtung dient, wobei die Abdeckung Bestandteil des zugehörigen Dichtelements ist.

### Kurze Beschreibung der Zeichnungen

Weitere Merkmale der Erfindung ergeben sich aus der folgenden Beschreibung und den Zeichnungen, in denen Ausführungsbeispiele der Erfindung schematisch dargestellt sind.

Es zeigen:
- Figur 1: einen Teillängsschnitt eines Ausrücklagers mit einer zusätzlichen, schleifenden Dichtung;
- Figur 1a: einen Teillängsschnitt eines nicht metallischen Dichtkragens einer inneren Metalldichtscheibe;
- Figur 2: einen Teillängsschnitt eines Ausrücklagers mit einem aufsteckbarem Kunststoffring als Dichtungsteil;
- Figur 3: einen Teillängsschnitt eines Ausrücklagers mit einer Spaltdichtung zwischen einem Dichtflansch und einem Bördelkragen, die aus Metall bestehen;
- Figur 3a: eine Alternative zu Figur 3 mit schleifender Dichtung zwischen Metall-Gleitpartnern;
- Figur 15: einen Längsschnitt durch ein Detail einer alternativen Dichtungsanordnung,
- Figur 16: einen Längsschnitt durch ein weiteres Detail einer alternativen Dichtungsanordnung,
- Figur 17: einen Längsschnitt durch ein weiteres Detail einer alternativen Dichtungsanordnung.

### Ausführliche Beschreibung der Zeichnungen

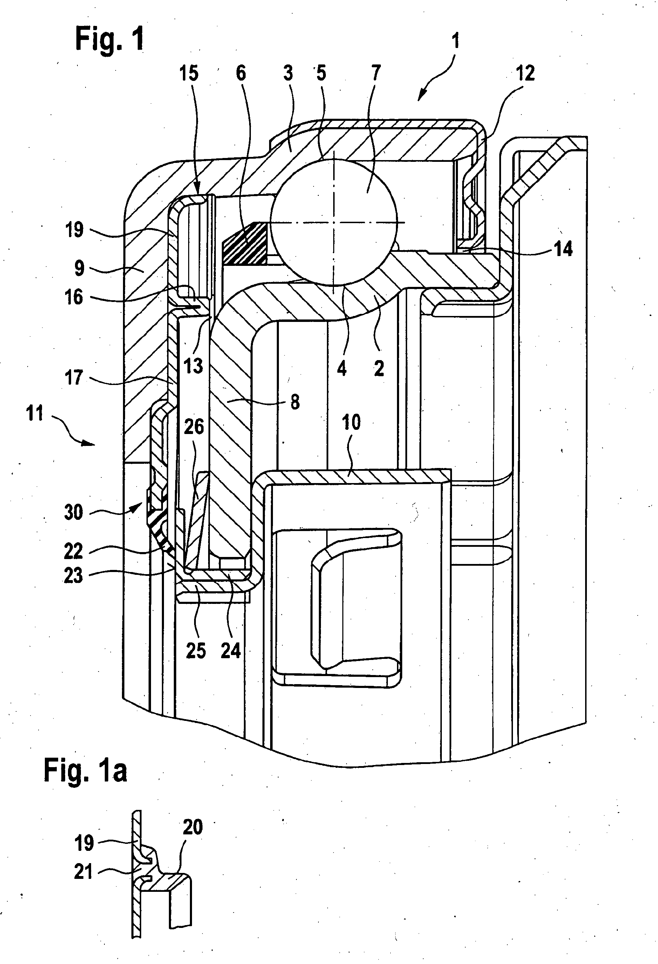

Das in Figur 1 im Teillängsschnitt dargestellte Ausrücklager 1 ist als Schrägschulterlager ausgebildet. Es weist einen drehstarr angeordneten inneren Lagerring 2 und einen umlaufenden äußeren Lagerring 3 auf. Zwischen den Lagerringen 2 und 3 sind an Laufbahnen 4 und 5 geführte und in einem Käfig 6 eingesetzte Wälzkörper 7 angeordnet. Der innere und äußere Lagerring 2, 3 ist mit je einem radial nach innen in Richtung einer Längsachse des Ausrücklagers 1 ausgerichteten Innenringflansch 8 und Außenringflansch 9 einteilig verbunden. Der Innenringflansch 8 ist dabei drehstarr über einen Halterring 10 mit einer axial verschiebbaren, in Figur 1 nicht abgebildeten Betätigungsvorrichtung verbunden. Diese ist vorzugsweise als CSC (Concentric-Slave-Cylinder)-Vorrichtung ausgebildet. Auf die kupplungsnahe Fläche des Außenringflanschs 9 stützt sich eine ebenfalls nicht dargestellte Tellerfeder der Schaltkupplung kraftschlüssig ab.

Zur Abdichtung der Wälzkörper 7 nach außen sind auf deren kupplungsnahen Seite eine an sich bekannte innere Metalldichtscheibe 15 und auf deren kupplungsfernen Seite ein ebenfalls bekanntes Dichtelement 12 vorgesehen. Diese wirken zusammen mit dem inneren Lagerring 2 als Spaltdichtungen. Sie sind durch Reibschluss mit dem äußeren Lagerring 3 verbunden und unter Einhaltung von ringförmigen Dichtspalten 13, 14 bis an den inneren Lagerring 2 geführt.

Die kupplungsseitige innere Metalldichtscheibe 15 besitzt einen metallischen Dichtkragen 16, der zusammen mit dem inneren Lagerring 2 den ringförmigen Dichtspalt 13 bildet. Dessen Dichtverhalten ist bei guten Straßenverhältnissen ausreichend, es muss aber bei schlechten Straßen verbessert werden.

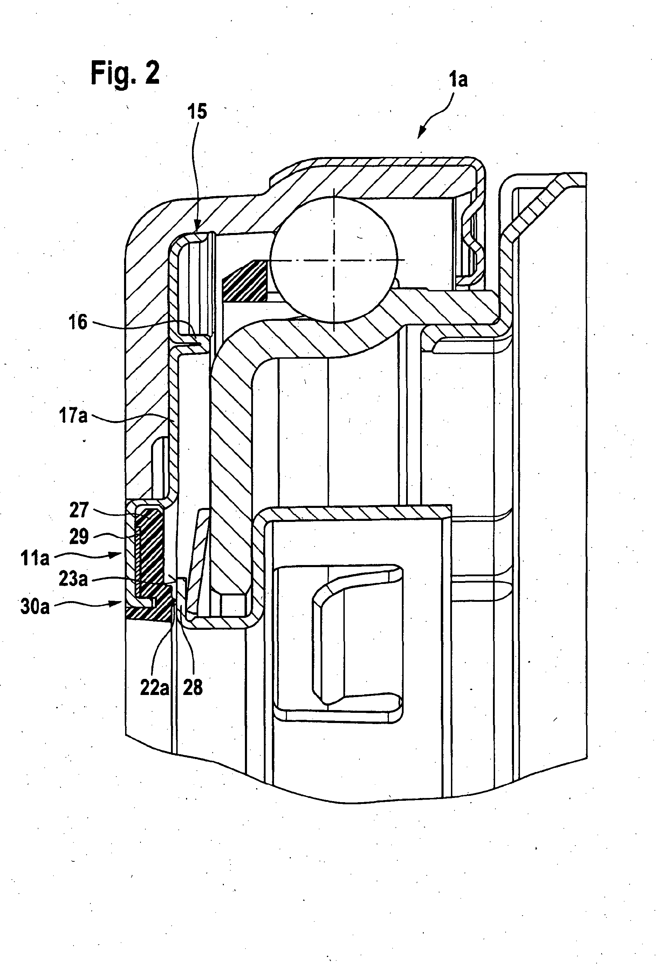

Dazu dienen die unterschiedlichen, in den Figuren 1 bis 14 dargestellten zusätzlichen Dichtelemente 11, 11a bis m. In den Ausführungsbeispielen der Figuren 2 bis 14 besitzen die mit dem ersten Ausführungsbeispiel übereinstimmenden Bauteile keine Bezugsziffer. Deren Beschreibung entspricht der des ersten Ausführungsbeispiels.

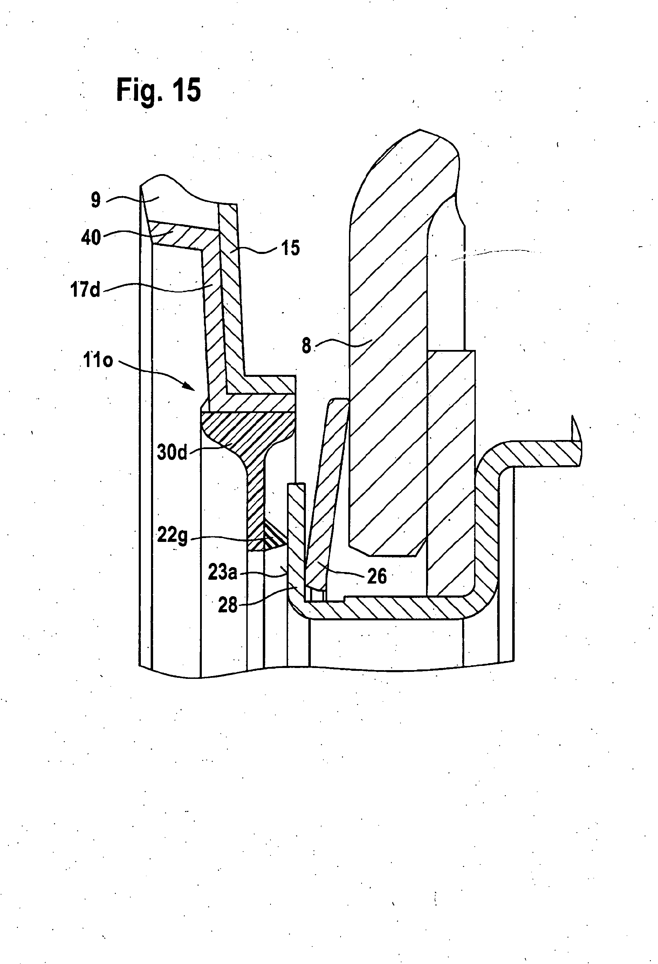

So zeigt Figur 1 ein zusätzliches Dichtelement 11, das einen radialen Dichtflansch 17 aus Metallblech aufweist, der mit der inneren Metalldichtscheibe 15 einteilig verbunden ist. *Alternativ dazu zeigen die* *Figuren 15**,* *16* *und* *17* *Dichtungsanordnungen, in denen Dichtelemente 11n, 11o bzw. 11p separat zu der Metalldichtscheibe ausgebildet sind.*

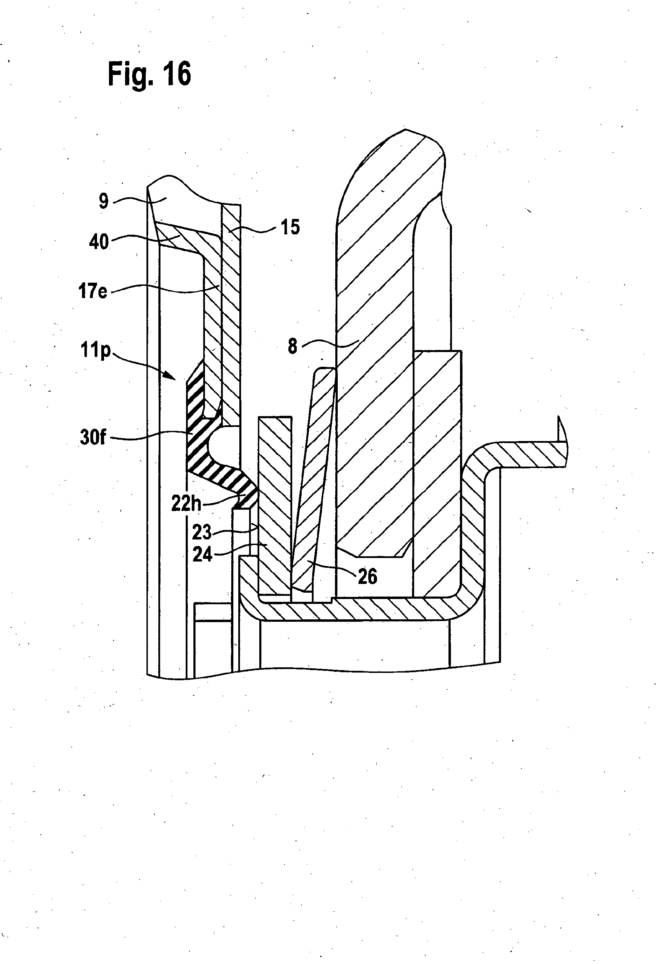

*Wenn die Dichtelemente 11n, 11o bzw. 11p separat zu der Metalldichtscheibe 15 ausgebildet sind, ist* es *denkbar, dass das Dichtelement beispielsweise mit der Metallscheibe durch Schweißen, Kleben oder Nieten verbunden ist, bzw. wie in* *Figur 15* *dargestellt ist, das Dichtelement 11o reibschlüssig, d. h. durch Presssitz mit der Metalldichtscheibe 15 verbunden ist. Alternativ dazu kann auch ein Verbund aus der Metalldichtscheibe 15 und dem Dichtelement 11p über das Material (Elastomer oder andere gummielastische Werkstoffe) hergestellt sein, wie das in* *Figur 16* *angedeutet ist.*

Ein innerer Endbereich 30 des radialen Dichtflanschs 17 steht über ein Dichtungselement in Kontakt mit einem drehfesten Vorspannring 24 oder mit einem Bördelkragen 28 (siehe Figur 2).

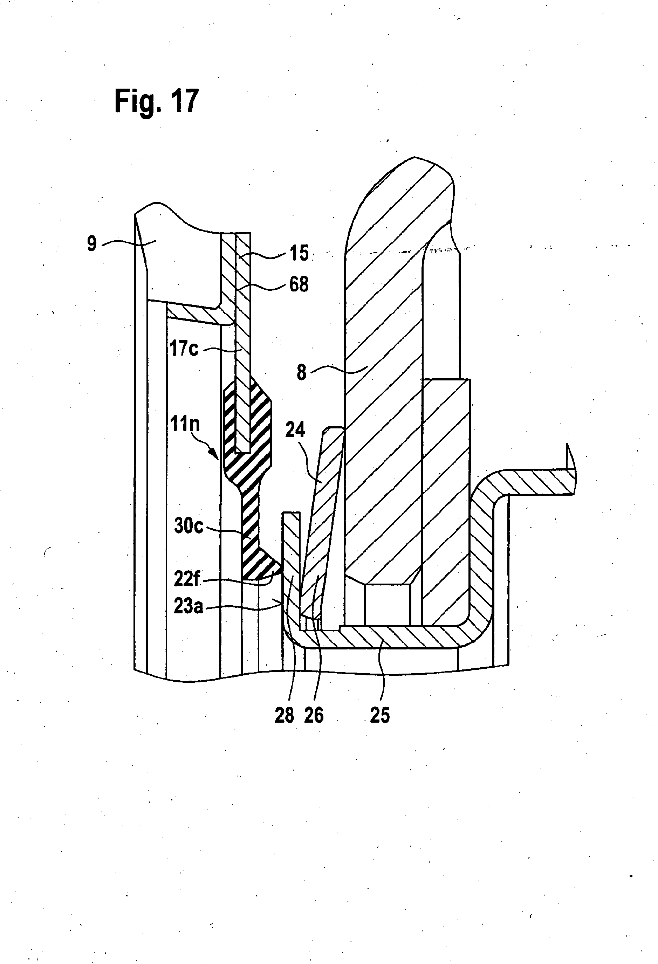

Gemäß Figur 1 erfolgt die einteilige Ausbildung des radialen Dichtflanschs 17 mit der inneren Metalldichtscheibe 15 über eine Dopplung von deren metallischem Dichtkragen 16 oder über eine Anformung des radialen Dichtflanschs 17 an eine radiale Wand 19 der inneren Metalldichtscheibe 15. *Alternativ dazu zeigt* *Figur 17* *eine Anordnung, in der ein Dichtelement 11n aus einer Dopplung 68 hervorgeht. Die Dopplung 68 ist aus Blech entweder des einteilig mit dem Blech der Metalldichtscheibe 15 verbundenen Dichtelements 11n oder aus Blech der einteilig mit dem Blech des Dichtelements 11n verbundenen Metalldichtscheibe 15.*

Wie in Figur 1 a dargestellt ist, kann anstelle des metallischen Dichtkragens 16 der inneren Metalldichtscheibe 15 ein nicht metallischer Dichtkragen 20 treten, der an die verlängerte, mit Durchstellung 21 versehene, radiale Wand 19 dauerhaft angespritzt oder anvulkanisiert wird.

Aus Figur 1 *alternativ aus* *Figur 16* ist ersichtlich, dass in Verlängerung des radialen Dichtflanschs 17 *bzw. 17e* eine Dichtlippe 22 *bzw. 22h* angespritzt oder anvulkanisiert ist, die zusammen mit einer Anlauffläche 23 eines Vorspannrings 24 eine schleifende Dichtung bildet. Die Dichtlippen

Auf dem Vorspannring 24 können zur Erleichterung der Montage des Ausrücklagers der innere Lagerring 2 mit dem Innenringflansch 8 und einer Tellerfeder 26 sowie mit einem der am Innenringflansch 8 befestigten Dichtungen 11 c bis m vormontiert und zur Fertigmontage auf einen Haltebund 25 aufgepresst werden. Diese Lösung kann bei allen Ausrücklagern 1, 1a bis m alternativ zum Bördelkragen 28 zur Anwendung kommen *an denen nach den Darstellungen der* *Figuren 2**, 4 und* *Figuren 15* *und* *17* *Dichtlippen 22a*, *22b, 22f bzw. 22g bei normalen Betriebsbedingungen und zumindest im Neuzustand der Dichtungen ohne Verschleiß vorzugsweise axial anliegen.*

In Figur 2 ist ein Ausrücklager 1 a mit einem Dichtelement 11 a dargestellt, das einen Kunststoffring 27 aufweist, der auf einem entsprechend ausgebildeten inneren Endbereich 30a des radialen Dichtflanschs 17a in Kupplungsrichtung aufsteckbar ist. Der Kunststoffring 27 steht über mindestens eine, zu dem Bördelkragen 28 hin ausgerichtete Dichtlippe 22a mit der Anlauffläche 23a des Bördelkragens 28 in Kontakt. Dieser Kontakt führt durch die Federkraft einer Wellfeder 29, die zwischen dem Kunststoffring 27 und dem entsprechend ausgebildeten radialen Dichtflansch 17a angeordnet ist, zu einer schleifenden Dichtung.

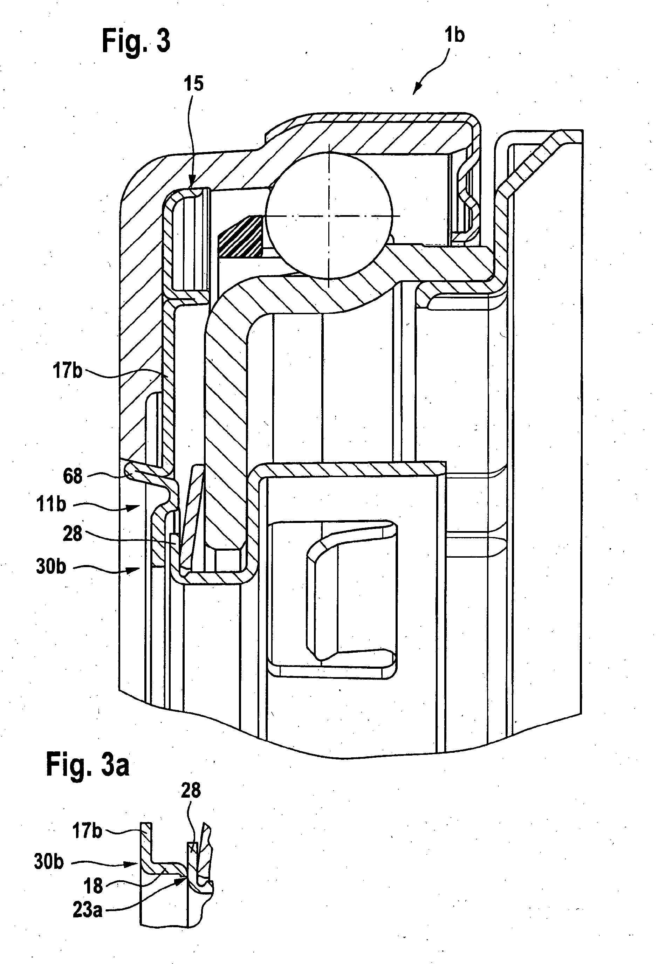

Figur 3 zeigt ein Ausrücklager 1 b mit einem Dichtelement 11 b, dessen Dichtflansch 17b mit seinem Endbereich 30b parallel zu dem Bördelkragen 28 angeordnet ist und der zusammen mit diesem eine Spaltdichtung bildet.

Dem gegenüber ist in Figur 3a der Endbereich 30b des radialen Dichtflanschs 17b als senkrecht zum Bördelkragen 28 angeordneter Dichtkragen 18 ausgebildet, der zusammen mit der Anlauffläche 23a des Bördelkragens 28 eine schleifende Dichtung mit metallischen Partnern bildet.

*. In den Dichtungsanordnungen nach* *Figur 15**,* *16* *bzw. 17 sitzt das jeweilige Dichtelement 11n, 11o bzw. 11p in der Bohrung 40 des Außenringflanschs 9, die eine nach außen hin sich öffnende konische Erweiterung besitzt.* Dadurch wirken diese Bohrungen als Schleuderringe, die Schmutz nach außen transportieren.

### Bezugszeichenliste

- 1, 1a-m: Ausrücklager
- 2: innerer Lagerring
- 3: äußerer Lagerring
- 4: Laufbahn
- 5: Laufbahn
- 6: Käfig
- 7: Wälzkörper
- 8: Innenringflansch
- 9: Außenringflansch
- 10: Halterring
- 11,11a-*p*: Dichtelement
- 12: Dichtelement
- 13: Dichtspalt
- 14: Dichtspalt
- 15: innere Metalldichtscheibe
- 16: metallischer Dichtkragen
- 17,17a - *e*: radialer Dichtflansch
- 18: Dichtkragen
- 19: radiale Wand
- 20: nichtmetallischer Dichtkragen
- 21: Durchstellung
- 22,22a-*h*: Dichtlippe
- 23: Anlauffläche eines Vorspannringes
- 23a: Anlauffläche eines Bördelkragens
- 24: Vorspannring
- 25: Haltebund
- 26: Tellerfeder
- 27:
- 28: Bördelkragen
- 40: Bohrung
- 41:
- *68*: *Dopplung*

## Patentansprüche

1. Ausrücklager, insbesondere ein CSC-Lager für eine Betätigungseinrichtung einer Schaltkupplung für Fahrzeuge mit einem Verbrennungsmotor und einem Schaltgetriebe, wobei das als Schrägschulterlager ausgebildete Ausrücklager (1) einen umlaufenden, äußeren Lagerring (3) und einen drehstarren inneren Lagerring (2) aufweist, zwischen denen in Laufbahnen (4) und (5) geführte und in einen Käfig (6) eingesetzte Wälzkörper (7) angeordnet sind, wobei zu Abdichtung der kupplungsnahen Seite des Ausrücklagers (1) eine innere Metalldichtscheibe (15) vorgesehen ist, die mit dem äußeren Lagerring (3) in reibschlüssiger Verbindung steht und die unter Einhaltung eines ringförmigen Dichtspaltes (13) bis an den inneren Lagerring (2) geführt ist und wobei die beiden Lagerringe (2, 3) mit je einem rechtwinklig zur Längsachse des Ausrücklagers (1) ausgerichteten Innenringflansch (8) und Außenringflansch (9) einteilig verbunden sind, wobei, dass auf der kupplungsnahen Seite des Ausrücklagers (1, 1a-m) ein Dichtelement (11, 11a-m, *11n, 11o, 11p*) einer zusätzlichen Dichtung vorgesehen ist, das zur Ausbildung einer schleifenden und/oder einer Labyrinth- oder Spaltdichtung dient, wobei das Dichtelement (11, 11a-m, *11n, 11o, 11p*) zwischen einer kupplungsnahen Fläche des Außenringflansches (9) und einer kupplungsfernen Fläche des Innenringflansches (8) angeordnet ist, **dadurch gekennzeichnet, dass** das Ausrücklager einen Vorspannring und/oder einen Bördelkragen aufweist und dass das Dichtelement (11, 11a,11 b, *11n, 11o, 11e*) des Ausrücklagers (1, 1a, 1b) einen radialen nach innen gerichteten Dichtflansch (17, 17a, b, *17c, 17d, 17*e) aufweist, der aus Metallblech besteht und mit der inneren Metalldichtscheibe (15) einteilig verbunden oder separat zu dem anderen Metallblech der inneren Metalldichtscheibe (15) ausgebildet ist und dessen innerer Endbereich (30, 30a, b, *30c*) in metallischem oder nicht metallischem Kontakt mit einer verdrehfesten Anlauffläche (23, 23a) des Vorspannringes (24) oder des Bördelkragens (28) steht. *(Fig. 1, 2, 3 und 17)*

2. Ausrücklager nach Anspruch 1, **dadurch gekennzeichnet, dass** dass das Dichtelement (11, 11a, 11 b, 11 n, 11o, 11 p) am inneren Endbereich (30, 30a, 30b, 30c, 30d, 30e) des radialen Dichtflanschs (17, 17a, 17b, 17c, 17d, 17e) eine Dichtlippe (22g, 22h) aufweist, die angespritzt oder anvulkanisiert ist und die mit der drehfesten Anlauffläche (23, 23a) eines Vorspannringes (24) oder eines Bördelkragens (28) in nicht metallischem Kontakt steht und eine schleifende Dichtung bildet. (Fig.15, 16)

3. Ausrücklager nach Anspruch 2, **dadurch gekennzeichnet, dass** das Material, aus dem die Dichtlippe (22, 22a, 22b, 22f, 22g, 22h) ist, an das Metallblech des Dichtelements (11, 11 a, 11 b, 11 n, 11o, 11p) und/ oder an das Metallblech der Metalldichtscheibe (15) angespritzt oder anvulkanisiert ist.(Fig. 16)

4. Ausrücklager nach Anspruch 1, **dadurch gekennzeichnet, dass** die Dichtlippe (22, 22a, 22f, 22g, 22h) schleifend im nicht metallischen Kontakt axial anliegt.(Fig. 15, 16).

5. Ausrücklager nach Anspruch 1, **dadurch gekennzeichnet, dass** das Dichtelement (11, 11a, 11 b, 11 n, 11o, 11p) in einer Bohrung (40) des Außenringflanschs (9) sitzt.(Fig. 15, 16)

6. Ausrücklager nach Anspruch 5, **dadurch gekennzeichnet, dass** die Bohrung (40) des Außenringflansches (9) eine sich nach außen öffnende, konische Erweiterung aufweist, in der das Dichtelement (11, 11a, 11b, 11 n, 11o, 11p) sitzt. (Fig. 15, 16)

## Claims

1. Release bearing, in particular a CSC bearing, for an actuating device of a shift clutch for vehicles having an internal combustion engine and a gear-shift transmission, the release bearing (1) designed as an oblique shoulder bearing having a rotating outer bearing ring (3) and a rotationally fixed inner bearing ring (2), between which are arranged rolling bodies (7) guided in raceways (4) and (5) and inserted into a cage (6), there being provided, for sealing off the near-clutch side of the release bearing (1), an inner metal sealing disc (15) which is connected frictionally to the outer bearing ring (3) and which, while maintaining an annular sealing gap (13), is led up to the inner bearing ring (2), and the two bearing rings (2, 3) being connected in one part in each case by means of an inner annular flange (8) and outer annular flange (9) oriented at right angles to the longitudinal axis of the release bearing (1), there being provided on the near-clutch side of the release bearing (1, 1a-m) a sealing element (11, 11a-m, 11n, 11o, 11p) of an additional seal, which sealing element serves for forming a trailing and/or a labyrinth or gap seal, the sealing element (11, 11a-m, 11n, 11o, 11p) being arranged between a near-clutch surface of the outer annular flange (9) and a clutch-remote surface of the inner annular flange (8), **characterized in that** the release bearing has a prestressing ring and/or a crimped collar, and **in that** the sealing element (11, 11a, 11b, 11n, 11o, 11e) of the release bearing (1, 1a, 1b) has a radial inwardly directed sealing flange (17, 17a, b, 17c, 17d, 17e) which consists of sheet metal and is connected in one part to the inner metal sealing disc (15) or is formed separately from the other sheet metal of the inner metal sealing disc (15) and the inner end region (30, 30a, b, 30c) of which is in metallic or non-metallic contact with a rotationally fixed run-on surface (23, 23a) of the prestressing ring (24) or of the crimped collar (28) (Fig. 1, 2, 3 and 17).

2. Release bearing according to Claim 1, **characterized in that** the sealing element (11, 11a, 11b, 11n, 11o, 11p) has, at the inner end region (30, 30a, 30b, 30c, 30d, 30e) of the radial sealing flange (17, 17a, 17b, 17c, 17d, 17e), a sealing lip (22g, 22h) which is injection-moulded on or vulcanized on and which is non-metallic contact with the rotationally fixed run-on surface (23, 23a) of a prestressing ring (24) or of a crimped collar (28) and forms a trailing seal (Fig. 15, 16).

3. Release bearing according to Claim 2, **characterized in that** the material from which the sealing lip (22, 22a, 22b, 22f, 22g, 22h) is made is injection-moulded or vulcanized onto the sheet metal of the sealing element (11, 11a, 11b, 11n, 11o, 11p) and/or onto the sheet metal of the metal sealing disc (15) (Fig. 16).

4. Release bearing according to claim 1, **characterized in that** the sealing lip (22, 22a, 22f, 22g, 22h) comes to bear axially in a trailing manner in non-metallic contact (Fig. 15, 16).

5. Release bearing according to Claim 1, **characterized in that** the sealing element (11, 11a, 11b, 11n, 11o, 11p) is seated in a bore (40) of the outer annular flange (9) (Fig. 15, 16).

6. Release bearing according to Claim 5, **characterized in that** the bore (40) of the outer annular flange (9) has an outwardly opening conical widening in which the sealing element (11, 11a, 11b, 11n, 11o, 11p) is seated (Fig. 15, 16).

## Revendications

1. Palier de débrayage, en particulier palier CSC (à cylindre récepteur concentrique) pour un dispositif d'actionnement d'un embrayage de changement de vitesses de véhicules comprenant un moteur à combustion interne et une transmission à changement de vitesses, le palier de débrayage (1) réalisé sous forme de palier à épaulement oblique présentant une bague de palier externe (3) périphérique et une bague de palier interne (2) rigide en rotation, entre lesquelles sont disposés des corps de roulement (7) guidés dans des chemins de roulement (4) et (5) et insérés dans une cage (6), un disque d'étanchéité métallique interne (15) étant prévu pour l'étanchéité du côté proche de l'embrayage du palier de débrayage (1), lequel est en liaison par engagement par friction avec la bague de palier externe (3) et est guidé jusqu'à la bague de palier interne (2) en conservant une fente d'étanchéité annulaire (13) et les deux bagues de palier (2, 3) étant connectées d'une seule pièce à chaque fois à une bride de bague interne (8) et une bride de bague externe (9) orientées perpendiculairement par rapport à l'axe longitudinal du palier de débrayage (1), un élément d'étanchéité (11, 11a-m, 11n, 11o, 11p) d'un joint d'étanchéité supplémentaire étant prévu sur le côté proche de l'embrayage du palier de débrayage (1, 1a-m), lequel sert à réaliser un joint d'étanchéité glissant et/ou à labyrinthe ou à fente, l'élément d'étanchéité (11, 11a-m, 11n, 11o, 11p) étant disposé entre une surface proche de l'embrayage de la bride de bague externe (9) et une surface éloignée de l'embrayage de la bride de bague interne (8), **caractérisé en ce que** le palier de débrayage présente une bague de précontrainte et/ou un collet de bordage et **en ce que** l'élément d'étanchéité (11, 11a, 11b, 11n, 11o, 11e) du palier de débrayage (1, 1a, 1b) présente une bride d'étanchéité radiale orientée vers l'intérieur (17, 17a, b, 17c, 17d, 17e) qui se compose de tôle métallique et qui est connectée d'une seule pièce au disque d'étanchéité métallique interne (15) ou qui est réalisée séparément de l'autre tôle métallique du disque d'étanchéité métallique interne (15) et dont la région d'extrémité interne (30, 30a, b, 30c) est en contact métallique ou non métallique avec une surface d'arrêt (23, 23a) fixée en rotation de la bague de précontrainte (24) ou du collet de bordage (28).

2. Palier de débrayage selon la revendication 1, **caractérisé en ce que** l'élément d'étanchéité (11, 11a, 11b, 11n, 11o, 11p) présente, au niveau de la région d'extrémité interne (30, 30a, 30b, 30c, 30d, 30e) de la bride d'étanchéité radiale (17, 17a, 17b, 17c, 17d, 17e), une lèvre d'étanchéité (22g, 22h), qui est surmoulée par injection ou vulcanisée et qui est en contact non métallique avec la surface d'arrêt fixée en rotation (23, 23a) d'une bague de précontrainte (24) ou d'un collet de bordage (28) et forme un joint d'étanchéité glissant.

3. Palier de débrayage selon la revendication 2, **caractérisé en ce que** le matériau constituant la lèvre d'étanchéité (22, 22a, 22b, 22f, 22g, 22h) est surmoulé par injection ou vulcanisé sur la tôle métallique de l'élément d'étanchéité (11, 11a, 11b, 11n, 11o, 11p) et/ou sur la tôle métallique du disque d'étanchéité métallique (15).

4. Palier de débrayage selon la revendication 1, **caractérisé en ce que** la lèvre d'étanchéité (22, 22a, 22f, 22g, 22h) s'applique axialement de manière glissante en contact non métallique.

5. Palier de débrayage selon la revendication 1, **caractérisé en ce que** l'élément d'étanchéité (11, 11a, 11b, 11n, 11o, 11p) repose dans un alésage (40) de la bride de bague externe (9).

6. Palier de débrayage selon la revendication 5, **caractérisé en ce que** l'alésage (40) de la bride de bague externe (9) présente un élargissement conique s'ouvrant vers l'extérieur, dans lequel repose l'élément d'étanchéité (11, 11a, 11b, 11n, 11o, 11p).
